# EUROPÄISCHE PATENTANMELDUNG

(11) **EP 2 390 608 A1**
(43) Veröffentlichungstag der Anmeldung: **30.11.2011**
(21) Anmeldenummer: 10163800.5
(22) Anmeldetag: 25.05.2010
(51) Int. Cl.: F27B 1/00, F27B 1/02, F27B 7/20, F27B 7/38, C04B 2/12

(54) **Verfahren und Vorrichtung zum Kühlen**

(71) Anmelder: Messer France S.A.S., 92816 Puteaux Cedex (FR); Messer Group GmbH, 65843 Sulzbach (DE)
(72) Erfinder: Matheoud, Patrick, 92390, Villeneuve La Garenne (FR); Hennequin, James, 77410, Annet sur Marne (FR); Herzog, Friedhelm, 47803, Krefeld (DE)
(74) Vertreter: Münzel, Joachim R.

(57) **Zusammenfassung**

Erfindungsgemäß finden die Kalzinierung von Kalbstein oder andere Karbonaten und die Abkühlung in zwei voneinander abgetrennten und über eine Schleusenanordnung (17) miteinander verbundenen Ofenräumen (2,3) statt, in denen jeweils unterschiedliche Atmosphären herrschen. In dem die Kalzinierungszone enthaltenden Ofenraum (2) findet eine Verbrennung von kohlenstoffhaltigem Brennstoff mit möglichst reinem Sauerstoff unter Entstehung eines kohlendioxidreichen Abgases statt, während in dem Ofenraum (3), in dem die Abkühlung des kalzinierten Produkts stattfindet, eine kohlendioxidarme Atmosphäre aufrechterhalten wird. Dadurch wird eine Rekarbonisierung des kalzinierten Produkts während der Abkühlung vermieden. Zugleich ist die Erzeugung eines im Wesentlichen aus Kohlendioxid bestehenden Verbrennungsabgases möglich, das einer wirtschaftlichen Verwertung oder der Sequestrierung zugeführt werden kann.

## Beschreibung

Die Erfindung betrifft ein Verfahren zum Brennen von Kalkstein oder anderen Karbonaten, bei dem das Karbonat einer durch die Verbrennung von Brennstoff mit Oxidationsmittel erzeugten hohen Temperatur ausgesetzt und zu einem Produkt kalziniert wird und das kalzinierte Produkt anschließend durch Kontakt mit einem Kühlmedium gekühlt wird. Die Erfindung betrifft des Weiteren eine entsprechende Vorrichtung.

Bei der Herstellung von Kalk wird auf den Umstand zurückgegriffen, dass Kalkstein und auch der verwandte Dolomitstein beim Erhitzen ihre chemische Zusammensetzung verändern. Bei Temperaturen zwischen 900 und 1.300 °C wird der Kalkstein (CaCO₃) in gasförmiges Kohlendioxid (CO₂) und Calciumoxid (CaO = Branntkalk) zerlegt. Die dazu erforderliche Wärme wird in der Regel durch Verbrennung eines gasförmigen, flüssigen oder pulverförmigen Brennstoffes unter Luftzufuhr in einem Schacht- oder Drehrohrofen bereitgestellt. Bei der Herstellung von Kalk in Schachtöfen, wie sie beispielsweise in der DE 148 30 43 A1 beschrieben wird, wird Primärluft von unten in den im Wesentlichen senkrecht stehenden Schachtofen eingeblasen Der Brennstoff, häufig Erdgas, Öl oder Kohlenstaub, wird in einem mittleren Bereich des Ofens eingedüst und dort mit der dem Ofen von unten zugeführten Primärluft verbrannt. Der Verbrennungsprozess kann gegebenenfalls durch Zuführung von Sekundärluft im oberen Bereich des Schachtofens optimiert werden. Durch die Verbrennung wird innerhalb des Schachtofens ein Temperaturprofil ausgebildet, das, beginnend vom oberen Ende des Schachtofens, eine nach unten hin ansteigende Temperatur zeigt, die im Bereich der Brennstoffzuführung, der sogenannten Kalzinierungszone, ihr Maximum von bis zu 1300°C erreicht. Unterhalb des Brennstoffeintritts sinkt die Temperatur des Ofeninnenraums aufgrund der von unten zugeführten Frischluft rasch ab. Der von oben aufgegebene Kalkstein wird somit im oberen Bereich des Schachtofens erwärmt und auf die für die Kalzinierung erforderliche Temperatur gebracht. Nach erfolgter Kalzinierung fällt das kalzinierte Produkt, der Branntkalk, in den unteren Bereich des Ofens und wird von der dort einströmenden Primärluft abgefühlt

Sowohl bei der Verbrennung des üblicherweise fossilen Brennstoffs als auch bei der Kalzinierung selbst fällt in erheblichem Maße Kohlendioxid an, das zusammen mit dem Luftstickstoff, Wasserdampf sowie mit gegebenenfalls bei der Verbrennung anfallenden Schadstoffen abgeführt wird. Während die Schadstoffe durch geeignete Filtermaßnahmen aus der Abluft entfernt werden können, ist die großtechnische Trennung von Kohlendioxid und Stickstoff wirtschaftlich kaum zu bewerkstelligen. Aus diesem Grunde werden beim Brennen und Sintern von Kalkstein und anderen Karbonaten erhebliche Mengen an Kohlendioxid in die Umgebungsluft abgegeben. Es wäre daher wünschenswert, beim Prozess der Kalkherstellung ein aus möglichst reinem Kohlendioxid bestehendes Abgas zu gewinnen, das nach üblichen Methoden gereinigt und sequestriert werden kann.

Eine Möglichkeit, den Stickstoffanteil im Abgas zu beseitigen, besteht in der Verbrennung mit reinem Sauerstoff oder einem sauerstoffreichen Oxidationsmittel, Als "sauerstoffreiches Oxidationsmittel" oder "sauerstoffreiches Gas" wird hier ein Gas verstanden, dessen Sauerstoffgehalt über dem Sauerstoffgehalt von Luft liegt, also beispielsweise einen Sauerstoffanteil von über 30 Vol.-% aufweist. Insbesondere handelt es sich dabei um ein Gas mit einem Sauerstoffgehalt von über 90 Vol.-%, bevorzugt über 95 Vol.-%, besonders bevorzugt über 99 Vol.-%. Derartige Gase werden beispielsweise in kryogenen Luftzerlegungsanlagen oder in mit Druckwechseladsorptionsverfahren (PSA oder VPSA) arbeitenden Sauerstoffgeneratoren hergestellt. Bei der Verbrennung üblicher fossiler Brennstoffe, wie Erdgas oder Öl, mit Sauerstoff oder einem sauerstoffreichen Gas treten jedoch mitunter sehr hohe F!ammentemperaturen auf, die die Ofenwände beschädigen können. Gemäß dem bekannten, für Verbrennungsprozesse in Kraftwerken entwickelten "Oxifuel" - Verfahren können die Flammentemperaturen dadurch gesenkt werden, dass ein Teil des bei der Verbrennung entstehenden Abgases in den Ofen zurückgeführt wird. Da jedoch das Abgas bei der Verbrennung von kohlenstoffreichem Brennstoff, wie beispielsweise Erdgas einen sehr hohen Anteil an Kohlendioxid aufweist, entsteht dadurch die Gefahr, dass ein nicht unerheblicher Teil des bereits erzeugten Branntkalks mit dem rezyklierten Kohlendioxid zu Kalziumkarbonat rückkarbonisiert.

Aufgabe der vorliegenden Erfindung ist daher, ein Verfahren sowie eine Vorrichtung zum Brennen von Kalkstein oder anderen Karbonaten anzugeben, bei dem als Abgas möglichst reines, sequestrierfähiges Kohlendioxid entsteht.

Gelöst ist dieser Aufgabe durch ein Verfahren mit den Merkmalen des Patentanspruchs 1 und durch eine Vorrichtung mit den Merkmalen des Patentanspruchs 7.

Demgemäß ist erfindungsgemäß ein Verfahren der eingangs genannten Art und Zweckbestimmung dadurch gekennzeichnet, dass das Karbonat einem ersten, eine Kalzinierungszone enthaltenden Ofenraum zugeführt wird, in welchem zugleich Brennstoff und ein sauerstoffreiches Oxidationsmittel eingeleitet, verbrannt und das bei der Verbrennung und Kalzination entstehende kohlendioxidreiche Abgas zumindest teilweise als Rezykliergas in den Ofenraum rückgeführt wird. Anschließend wird das kalzinierte Produkt über eine Schleuseneinrichtung in einen zweiten, eine Abkühlzone enthaltenden Ofenraum überführt, dessen Atmosphäre zumindest in Wesentlichen strömungsdicht von der Atmosphäre des ersten Ofenraums abgetrennt ist und in dem die Kühlung des kalzinierten Produkts durch thermischen Kontakt mit einem Kühlmedium erfolgt.

Erfindungsgemäß erfolgen die Kalzinierung und die sich daran anschließende Abkühlung des kalzinierten Produkts also in zwei strömungstechnisch voneinander getrennten Ofenräumen, in denen unterschiedliche Atmosphären aufrechterhalten werden. Insbesondere ist es im Rahmen der Erfindung möglich, in der Kalzinierungszone eine Verbrennung eines kohlenstoffhaltigen Brennstoffs, wie etwa Erdgas, Biogas, Öl oder Kohlenstaub, mit einem sauerstoffreichen Gas unter Entstehung eines kohlendoxidreichen Abgases durchzuführen, während in dem die Abkühlzone enthaltenden zweiten Ofenraum eine Atmosphäre vorliegt, die kein oder nur wenig Kohlendioxid enthält. Dadurch wird wirksam vermieden, dass es während der Abkühlung zu einer Rekarbonisierung des kalzinierten Produkts kommt.

Bei der Kühlung des kalzinierten Produkts ist eine zumindest teilweise Kreislaufführung des Kühlmediums besonders vorteilhaft. Dabei durchläuft das Kühlmedium den zweiten Ofenraum in einer der Förderrichtung des kalzinierten Produkts entgegen gesetzten Richtung und erwärmt sich dabei im Wärmetausch mit dem zu kühlenden kalzinierten Produkt. Nach Durchlaufen des zweiten Ofenraums wird das Kühlmedium einer Kühleinrichtung zugeführt und danach zumindest teilweise erneut als gekühltes Kühlmedium in den zweiten Ofenraum zwecks Kühlung des kalzinierten Produkts rückgeführt. Dadurch ist auch ein Einsatz relativ teuer Inertgase zur Kühlung wirtschaftlich möglich.

Eine vorteilhafte Weiterbildung der Erfindung sieht vor, dass das Kühlmedium nach Durchlaufen des zweiten Ofenraums in Wärmetausch mit dem Rezykliergas des ersten Ofenraumes tritt. Die bei der Kühlung des kalzinierten Produkts vom Kühlmedium aufgenommene Wärme wird also zur Erwärmung des Rezykliergases vor dessen Eintritt in den ersten Ofenrum genutzt. Dadurch wird die Wirtschaftlichkeit des Verfahrens weiter verbessert. Der Wärmetauscher kann selbstverständlich auch in der zuvor beschriebenen Kreislaufleitung des Kühlmediums angeordnet sein und somit als Kühleinrichtung für das im Kreislauf geführte Kühlmedium fungieren.

Als bevorzugtes Kühlmedium im zweiten Ofenraum kommt Luft, besonders bevorzugt jedoch ein Inertgas, wie Stickstoff oder Edelgas oder ein überwiegend aus inerten Gasen bestehendes Gasgemisch, zum Einsatz.

Zur Verbesserung der Umweltverträglichkeit des erfindungsgemäßen Verfahrens ist es zweckmäßig, dass das im Abgas des ersten Ofenraums enthaltene Kohlendioxid zumindest teilweise abgetrennt und, ggf. nach einer Reinigungsstufe, einer Sequestrierung zugeführt wird. Das Kohlendioxid fällt als Produkt der Kalzinierung an, ebenso als Verbrennungsprodukt bei der Verbrennung eines kohlenstoffhaltigen Brennstoffs wie beispielsweise Erdgas, Öl oder Kohlenstaub. Der Kohlendioxidanteil im Abgas wird durch die Verwendung von Sauerstoff oder sauerstoffreichem Gas mit einem Sauerstoffanteil von beispielsweise 50 Vol.-% oder 90 Vol.-% anstelle der bei bekannten Kalzinierverfahren üblicherweise verwendeten Luft als Oxidationsmittel weiter erhöht, was die Sequestrierung erleichtert.

Die Aufgabe der Erfindung wird auch durch eine Vorrichtung zum Brennen von Kalkstein oder anderen Karbonaten gelöst, mit einer in einem Ofenraum angeordneten Kalzinierungszone, in der das Karbonat einer durch die Verbrennung von Brennstoff mit einem Oxidationsmittel erzeugten hohen Temperatur ausgesetzt und dadurch zu einem Produkt kalziniert wird, und einer Abkühlzone, in der das kalzinierte Produkt durch thermischen Kontakt mit einem Kühlmedium gekühlt wird, und die dadurch gekennzeichnet ist, dass die Kalzinierungszone und die Abkühlzone jeweils in voneinander getrennten Ofenräumen angeordnet sind, wobei an den die Kalzinierungszone enthaltenden ersten Ofenraum eine Brennstoffzuleitung, eine Oxidationsmittelzuleitung und eine Abgasleitung und an den die Abkühlzone enthaltenden zweiten Ofenraum eine Zuleitung und eine Ableitung für das Kühlmedium angeschlossen ist, wobei der erste Ofenraum und der zweite Ofenraum über eine die Atmosphären der beiden Ofenräume zumindest im Wesentlichen strömungstechnisch voneinander trennenden Schleusenanordnung, durch die das kalzinierte Produkt von dem ersten Ofenraum zum zweiten Ofenraum überführbar ist, miteinander verbunden sind.

Durch bei der erfindungsgemäßen Vorrichtung vorgesehene Trennbarkeit der Atmosphären von Kalzinierungszone und Abkühlzone kann insbesondere eine unerwünschte Rekarbonisierung des in der Abkühlphase befindlichen kalzinierten Produkts durch kohlendioxidreiches Verbrennungsgas aus der Kalzinierungszone vermieden werden.

Bevorzugt ist die Abgasleitung des ersten Ofenraums mit einer Rückführleitung zum zumindest teilweisen Rückführen des Abgases in den ersten Ofenraum verbunden. Das bei der Verbrennung des Brennstoffs in der Kalzinierungszone entstehende Abgas kann so zumindest teilweise als Moderationsgas in den ersten Ofenraum zurückgeführt und damit zur Senkung der Flammentemperatur eingesetzt werden.

Eine besonders vorteilhafte Ausgestaltung der Erfindung sieht vor, dass die Zuleitung und die Ableitung für das Kühlmedium im zweiten Ofenraum über eine Kreislaufleitung miteinander verbunden sind, in der eine Kühleinrichtung vorgesehen ist. Dadurch kann Kühlmedium eingespart werden und es wird der wirtschaftliche Einsatz auch von relativ teuren Kühlmedien, wie beispielsweise Inertgase, wie Edelgase oder reiner Stickstoff, ermöglicht.

Um den Energieverbrauch beim Einsatz der erfindungsgemäßen Vorrichtung zu senken, ist es besonders zweckmäßig, dass die Ableitung für das Kühlmedium des zweiten Ofenraums mit der Rückführleitung des ersten Ofenraums über einen Wärmetauscher thermisch miteinander verbunden ist. Die Stoffströme in den Leitungen bleiben dabei getrennt, es findet lediglich ein Übergang von Wärmeenergie statt. Die bei der Abkühlung des kalzinierten Produkts vom Kühlmedium aufgenommene Wärme wird so dazu genutzt, das Rezykliergas im ersten Ofenraum vorzuwärmen.

Die Schleusenanordnung trennt die Atmosphären der beiden Ofenräume zumindest weitgehend. Je nach Art der Schleusenanordnung können die beiden Ofenraumatmosphären nicht nur hinsichtlich ihrer Zusammensetzung variieren, sondern z.B. auch unterschiedliche Druckverhältnisse aufweisen. Als bevorzugte Schleusenanordnung kommt eine mechanische Schleuse, beispielsweise eine Zellenradschleuse zum Einsatz. Alternativ oder ergänzend zu einer solchen mechanischen Schleuse kann jedoch auch ein Gasvorhang zum Einsatz kommen, bei dem durch Einströmen eines Trenngasstroms in ein Verbindungsrohr zwischen den Ofenräumen die Vermischung der beiden Ofenraumatmosphären unterbunden wird. Eine andere bevorzugte Ausgestaltung sieht die Anordnung eines Drucktrennrohrs (auch als "Seal leg" bezeichnet) vor, wie es beispielsweise in der US 4 078 675 B1 beschrieben ist. Dabei erfolgt die Abschottung der Ofenraumatmosphären durch das pulverförmige Produkt selbst, während dieses das die Ofenräume verbindende Drucktrennrohr durchläuft.

Bevorzugt ist die Abgasleitung des ersten Ofenraums mit einer Einrichtung zum Reinigen von Kohlendioxid verbunden. In dieser Einrichtung wird das im Wesentlichen aus Kohlendioxid bestehende Abgas von anderen Stoffen befreit und so für eine weitere Verwertung in anderen industriellen Prozessen oder einer Endlagerung (Sequestrierung) vorbereitet.

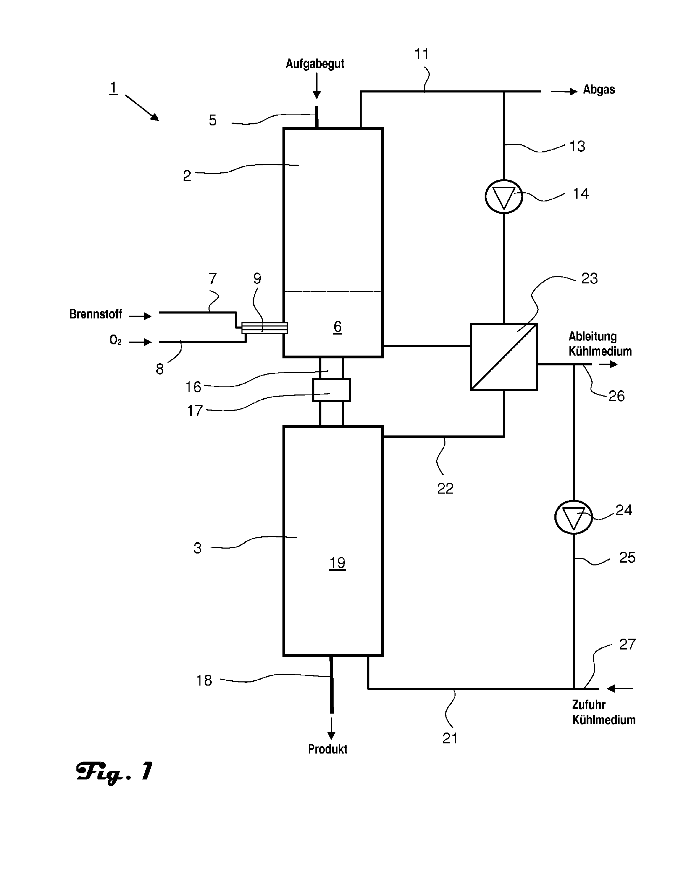

Anhand der Zeichnung soll ein Ausführungsbeispiel der Erfindung näher erläutert werden. In schematischer Ansicht zeigt die einzige Zeichnung (Fig. 1) eine erfindungsgemäße Vorrichtung zum Brennen von Kalkstein oder sonstigen Karbonaten.

Die Vorrichtung 1 zum Brennen von Kalkstein oder sonstigen Karbonaten umfasst einen ersten Ofenraum 2 zum Kalzinieren des Aufgabegutes und einen zweiten Ofenraum 3 zum Abkühlen des im ersten Ofenraum 2 kalzinierten Produkts. Bei den Ofenräumen 2 und 3 handelt es sich im Ausführungsbeispiel um voneinander getrennte Drehtrommel- oder Schachtöfen; die Ofenräume 2,3 können im Rahmen der Erfindung jedoch auch innerhalb eines einzigen Schachtofens oder Drehtrommelofens angeordnet sein. Das Aufgabegut, beispielsweise zermahlener Kalkstein oder Dolomit, wird an einer Aufgabeleitung 5 dem oberen Bereich des Ofenraums 2 zugeführt. In einem unteren Bereich des Ofenraumes 2, der Kalzinierungszone 6, münden zwei Zuleitungen 7,8, nämlich eine Brennstoffzuleitung 7 und eine Zuleitung 8 für Sauerstoff oder ein sauerstoffreiches Gas, an einer Brennerdüse 9 in den Ofenraum 2 ein. Als Brennstoff kommt bevorzugt Erdgas, Biogas, Öl oder Kohlenstaub zum Einsatz. Durch die Verbrennung des Brennstoffs wird innerhalb der Kalzinierungszone 6 die für die Kalzinierung des Aufgabeguts erforderliche Temperatur von beispielsweise 900°C -1300°C erzeugt. Die bei der Verbrennung entstehenden Verbrennungsgase steigen im Ofenraum 2 auf und durchlaufen so den Ofenraum 2 im Gegenstrom zum Aufgabegut. Die thermische Wechselwirkung zwischen Verbrennungsgasen und Aufgabegut führt dazu, dass sich das Aufgabegut auf seinem Weg abwärts zur Kalzinierungszone sukzessive erwärmt und die Verbrennungsgase auf ihrem Weg aufwärts zur Abgasleitung 11 ebenso sukzessive abkühlen. Von der Kalzinierungszone 6 zur Abgasleitung 11 zeigt das Temperaturprofil im Ofenraum 2 demzufolge eine kontinuierliche Senkung der Temperatur. Aufgrund der Verbrennung des überwiegend aus Kohlenstoff oder Kohlenwasserstoffen bestehenden Brennstoffes mit einem überwiegend aus Sauerstoff bestehenden Gases wird ein Verbrennungsgas erzeugt, das überwiegend aus Kohlendioxid und ggf. aus Wasser besteht. Im Falle von Kalkstein oder Dolomit als Aufgabegut wird bei der Kalzinierung in der Kalzinierungszone 6 aufgrund der Reaktion

CaCO₃ → CO₂ + CaO

Kalkstein in Branntkalk (CaO) umgewandelt. Dabei fällt wiederum Kohlendioxid an, das zusammen mit dem Verbrennungsgas als Abgas über die Abgasleitung 11 abgeführt wird. Das Abgas wird anschließend - hier nicht gezeigt - einem Verfahren zum Abtrennen und/oder Reinigung des Kohlendioxids unterzogen, welches dann einer weiteren Verwertung zugeführt oder sequestriert werden kann.

Ein Teil des Abgases wird jedoch aus der Abgasleitung 11 entnommen und über eine Rezyklierleitung 13 als sogenanntes Moderationsgas in den Ofenraum 2 zurückgeführt. Das Moderationsgas dient zur Regulierung der Verbrennungstemperatur in der Kalzinierungszone 6. Mittels eines Gebläses 14 kann die Menge des zur Rezyklierung bestimmten, in die Rezyklierleitung 13 abgezweigten Abgasstromes gesteuert werden.

Das bei der Kalzinierung in der Kalzinierungszone 6 erzeugte Produkt - beispielsweise Branntkalk (CaO) -wird anschließend zur Abkühlung dem zweiten Ofenraum 3 zugeführt. Hierzu ist zwischen dem ersten Ofenraum 2 und dem zweiten Ofenraum 3 eine Produktleitung 16 angeordnet. In der Produktleitung 16 ist eine Schleusenanordnung 17 vorgesehen, die gewährleistet, dass einerseits das Produkt die Produktleitung 16 durchqueren kann, andererseits die in den Ofenräumen 2,3 vorliegenden Atmosphären jedoch nicht durchmischt werden. Bei der Schleusenanordnung 17 handelt es sich beispielsweise um ein "Seal leg" (Drucktrennrohr), bei dem die pneumatische Trennung der Ofenraumatmosphären durch das durch die Schleusenanordnung 17 hindurchtransportierte Produkt erfolgt. Alternativ oder ergänzend kann auch - hier nicht gezeigt - eine Zellenradschleuse oder ein Gasvorhang zum Einsatz kommen. Das gekühlte Produkt wird über eine im unteren Bereich des Ofenraums 3 angeordnete Produktausleitung 18 dem Ofenraum 3 entnommen und beispielsweise einer Verpackungseinrichtung zugeführt.

Auf seinem Weg von der Mündung der Produktleitung 16 in den Ofenraum 3 bis zur Produktausleitung 18 wird das Produkt in thermischen Kontakt mit einem Kühlmedium gebracht. Der Ofenraum 3 fungiert somit über fast seiner gesamten Länge als Abkühlzone 19. Bei dem Kühlmedium handelt es sich bevorzugt um Luft oder um ein inertes Gas, wie Stickstoff oder ein Edelgas, beispielsweise Argon. Das Kühlmedium wird an einer Kühlmediumszuführung 21 in einem unteren Bereich des Ofenraums 3 eingeleitet, im Gegenstrom zum Produkt durch den Ofenraum 3 geführt und in einem oberen Abschnitt des Ofenraums 3 an einer Kühlmediumsableitung 22 aus dem Ofenraum 3 abzogen. Beim Wärmekontakt mit dem Kühlmedium kühlt sich das Produkt auf Temperaturwerte von 50°C und darunter ab. Die Wärme wird dabei vom Kühlmedium aufgenommen, dass sich dadurch auf Werte von mehreren Hundert Grad erhitzt. Das erhitzte Kühlmedium wird einem Wärmetauscher 23 zugeführt und dort in thermischen Kontakt mit dem Gas in der Rezyklierleitung 13 gebracht, das dadurch vor seiner Zuführung an den Ofenraum 2 vorgewärmt wird. Im Wärmetauscher 23 findet lediglich ein Wärmeübergang, jedoch kein Stoffaustausch zwischen den Medien statt. Beim Wärmetausch im Wärmetauscher 23 kühlt sich das Kühlmedium wieder ab. Das Kühlmedium kann anschließend entweder ganz oder teilweise mittels Gebläse 24 über eine Rückführleitung 25 der Kühlmediumszuleitung 21 und somit wiederum dem Ofenraum 3 zugeführt werden oder aber über eine Ableitung 26 abgeführt werden. Das über die Ableitung 26 abgeführte Kühlmedium wird in die Umgebungsatmosphäre abgegeben oder einer weiteren Verwendung zugeführt. Die Rückführleitung mit Gebläse 24 ist vor allem bei einem verhältnismäßig teuren Kühlmedium, wie beispielsweise Edelgas, zweckmäßig, da das Kühlmedium auf diese Weise mehrfach zum Einsatz kommt. Kommt dagegen ein preiswertes Kühlmedium wie beispielsweise Luft oder ein aufgrund anderer Prozesse reichlich vorhandenes Prozessgas zum Einsatz, erübrigt sich der Einbau der Rückleitung 24. In diesem Fall wird das über die Kühlmediumszuleitung 21 zugeführte Kühlmedium vollständig über die Ableitung 26 abgeführt. Kühlmedium, das über die Ableitung 26 abgeführt wurde, wird durch frisches Kühlmedium ersetzt das über eine Zuleitung 27 herangeführt wird. Als frisches Kühlmedium kommt beispielsweise aus flüssiger oder in tiefkaltem gasförmigem Zustand vorliegender Stickstoff in Betracht. Durch eine geeignete Regelung der Zufuhr an frischem Kühlmedium und des Anteils des durch die Rückführleitung 25 im Kreislauf geführten Kühlmediums kann im Übrigen auch die Temperatur des Kühlmediums bei der Einleitung in den Ofenraum 3 verändert und somit das Temperaturprofil im Ofenraum 3 gezielt beeinflusst werden.

Bei der erfindungsgemäßen Vorrichtung findet die Abkühlung des kalzinierten Stoffes im Ofenraum 3 somit in einer Atmosphäre statt, die eine andere Zusammensetzung und ggf. auch einen anderen Druck aufweist als die im Ofenraum 2 herrschende Atmosphäre. Insbesondere ist die Atmosphäre im Ofenraum 3 kohlendioxidarm und weist beispielsweise höchstens einen Kohlendioxidgehalt auf, der dem der Luft (400 ppmᵥ) entspricht. Dadurch wird in der Abkühlphase des Produkts eine Rekarbonisierung des kalzinierten Produkts durch Reaktion mit dem stark kohlendioxidhaltigen und in den Ofenraum 2 rezyklierten Abgas verhindert. Das Produkt besteht also in hoher Reinheit aus vollständig kalziniertem Material. Zugleich fällt als Abgas aus der Verbrennung weitgehend reines Kohlendioxid an, das einer weiteren Verwendung zugeführt oder sequestriert und somit für die Umwelt unschädlich gemacht werden kann.

Die Erfindung ist im Übrigen nicht auf den Einsatz beim Brennen von Kalk beschränkt, sie kann vielmehr auch bei anderen Prozessen, in denen Karbonate kalziniert werden, entsprechend eingesetzt werden.

### Bezugszeichenliste

- 1.: Vorrichtung
- 2.: Erster Ofenraum
- 3.: Zweiter Ofenraum
- 4.: -
- 5.: Aufgabeleitung
- 6.: Kalzinierungszone
- 7.: Brennstoffzuleitung
- 8.: Sauerstoffzuleitung
- 9.: Brennerdüse
- 10.: -
- 11.: Abgasleitung
- 12.: -
- 13.: Rezyklierleitung
- 14.: Gebläse
- 15.: -
- 16.: Produktleitung
- 17.: Schleusenanordnung
- 18.: Produktausleitung
- 19.: Abkühlzone
- 20.: -
- 21.: Kühlmediumszuleitung
- 22.: Kühlmediumsableitung
- 23.: Wärmetauscher
- 24.: Gebläse
- 25.: Rückführleitung
- 26.: Ableitung
- 27.: Zuleitung

## Patentansprüche

1. Verfahren zum Brennen von Kalkstein oder anderen Karbonaten, bei dem das Karbonat einer durch die Verbrennung von Brennstoff mit Oxidationsmittel erzeugten hohen Temperatur ausgesetzt und zu einem Produkt kalziniert wird und das kalzinierte Produkt anschließend durch Kontakt mit einem Kühlmedium gekühlt wird,
**dadurch gekennzeichnet,**
- **dass** das Karbonat einem ersten, eine Kalzinierungszone (6) enthaltenden Ofenraum (2) zugeführt wird, in welchem zugleich Brennstoff und ein sauerstoffreiches Oxidationsmittel eingeleitet, verbrannt und das bei der Verbrennung und Kalzination entstehende kohlendioxidreiche Abgas zumindest teilweise als Rezykliergas in den Ofenraum (2) rückgeführt wird,
- das kalzinierte Produkt anschließend über eine Schleuseneinrichtung (17) in einen zweiten, eine Abkühlzone (19) enthaltenden Ofenraum (3) überführt wird, dessen Atmosphäre zumindest in Wesentlichen strömungsdicht von der Atmosphäre des ersten Ofenraums getrennt ist und in dem die Kühlung des kalzinierten Produkts durch thermischen Kontakt mit dem Kühlmedium erfolgt.

2. Verfahren nach Anspruch 1, **dadurch gekennzeichnet, dass** das Kühlmedium den zweiten Ofenraum (3) in einer der Förderrichtung des kalzinierten Produkts entgegen gesetzten Richtung durchläuft, nach Durchlaufen des zweiten Ofenraums (3) einer Kühleinrichtung (23) zugeführt und das gekühlte Kühlmedium zumindest teilweise erneut dem zweiten Ofenraum (3) zwecks Kühlung des Produkts zugeführt wird.

3. Verfahren nach Anspruch 1 oder 2, **dadurch gekennzeichnet**, **dadurch gekennzeichnet, dass** das Kühlmedium nach Durchlaufen des zweiten Ofenraums (3) in Wärmetausch mit dem Rezykliergas des ersten Ofenraumes (2) tritt.

4. Verfahren nach einem der vorhergehenden Ansprüche, **dadurch gekennzeichnet, dass** als Kühlmedium im zweiten Ofenraum (3) Luft, ein Inertgas, wie Stickstoff oder ein Edelgas, oder ein überwiegend aus inerten Gasen bestehendes Gasgemisch eingesetzt wird.

5. Verfahren nach einem der vorhergehenden Ansprüche, **dadurch gekennzeichnet, dass** das im Abgas des ersten Ofenraums (2) enthaltene Kohlendioxid zumindest teilweise abgetrennt und einer Sequestrierung zugeführt wird.

6. Verfahren nach einem der Ansprüche 1 bis 5, **dadurch gekennzeichnet, dass** als Brennstoff im ersten Ofenraum (2) eine Kohlenstoffquelle und als Oxidationsmittel Sauerstoff oder ein sauerstoffreiches Gas zum Einsatz kommt.

7. Vorrichtung zum Brennen von Kalkstein oder anderen Karbonaten, mit einer in einem Ofenraum (2) angeordneten Kalzinierungszone (6), in der das Karbonat einer durch die Verbrennung von Brennstoff mit einem Oxidationsmittel erzeugten hohen Temperatur ausgesetzt und dadurch zu einem Produkt kalziniert wird, und einer Abkühlzone (19), in der das kalzinierte Produkt durch thermischen Kontakt mit einem Kühlmedium gekühlt wird,
**dadurch gekennzeichnet,**
**dass** die Kalzinierungszone (6) und die Abkühlzone (19) jeweils in voneinander getrennten Ofenräumen (2,3) angeordnet sind, wobei an den die Kalzinierungszone (6) enthaltenden ersten Ofenraum (2) eine Brennstoffzuleitung (7), eine Oxidationsmittelzuleitung (8) und eine Abgasleitung (11), und an den die Abkühlzone (19) enthaltenden zweiten Ofenraum (3) eine Zuleitung (21) und eine Ableitung (22) für das Kühlmedium angeschlossen ist, und der erste Ofenraum (2) und der zweite Ofenraum (3) über eine die Atmosphären der beiden Ofenräume (2,3) zumindest im Wesentlichen strömungstechnisch voneinander trennenden Schleusenanordnung (17), durch die das kalzinierte Produkt von dem ersten Ofenraum (2) zum zweiten Ofenraum (3) überführbar ist, miteinander verbunden sind.

8. Vorrichtung nach Anspruch 7, **dadurch gekennzeichnet, dass** die Abgasleitung des ersten Ofenraums (2) mit einer Rückführleitung (13) zum zumindest teilweisen Rückführen des Abgases in den ersten Ofenraum (2) verbunden ist.

9. Vorrichtung nach Anspruch 7 oder 8, **dadurch gekennzeichnet, dass** die Zuleitung (21) und die Ableitung (22) für das Kühlmedium im zweiten Ofenraum (3) über eine Kreislaufleitung (25) miteinander verbunden sind, in der eine Kühleinrichtung vorgesehen ist.

10. Vorrichtung nach einem der Ansprüche 7 bis 9, **dadurch gekennzeichnet, dass** die Ableitung (22) für das Kühlmedium des zweiten Ofenraums (3) mit der Rückführleitung (25) des ersten Ofenraums (2) über einen Wärmetauscher (23) thermisch miteinander verbunden ist.

11. Vorrichtung nach einem der Ansprüche 7 bis 10, **dadurch gekennzeichnet, dass** die Schleusenanordnung (17) eine mechanische Schleuse, beispielsweise eine Zellenradschleuse, ein Gasvorhang oder ein Drucktrennrohr (Seal leg) umfasst.

12. Vorrichtung nach einem der Ansprüche 7 bis 11, **dadurch gekennzeichnet, dass** die Abgasleitung (11) des ersten Ofenraums (2) mit einer Einrichtung zum Abtrennen von Kohlendioxid verbunden ist.
